# EUROPÄISCHE PATENTSCHRIFT

(11) **EP 1 731 976 B1**
(45) Veröffentlichungstag und Bekanntmachung des Hinweises auf die Patenterteilung: **01.06.2011**
(21) Anmeldenummer: 06011680.3
(22) Anmeldetag: 06.06.2006
(51) Int. Cl.: G05B 19/042

(54) **Konfigurationsverfahren für Steuergeräte**
Configuration method for control devices
Procédé de configuration pour appareils de commande

(30) Priorität: 03.06.2005 DE 102005025645
(43) Veröffentlichungstag der Anmeldung: 13.12.2006
(73) Patentinhaber: BOMAG GmbH, 56154 Boppard (DE)
(72) Erfinder: Schöfl, Martin, 55471 Tiefenbach (DE); Laux, Robert, 56566 Neuwied (DE); Fondel, Christian, 55430 Oberwesel (DE)
(74) Vertreter: Lang, Friedrich

(56) Entgegenhaltungen:
- EP-A- 0 434 986
- EP-A- 1 071 019
- EP-A- 1 089 147
- EP-A- 1 233 315
- DE-A1- 19 510 247

## Beschreibung

Die Erfindung betrifft ein Konfigurationsverfahren für ein Steuergerät einer Maschine, das einen Datenspeicher aufweist und in eine Maschinensteuerung eingebaut wird, die wenigstens ein bereits konfiguriertes Steuergerät mit einem Datenspeicher aufweist.

Durch ein derartiges Konfigurationsverfahren werden maschinenspezifische Daten oder Parameter wie beispielsweise Pumpen-, Ventil-, Mechanik-, oder Softwarekennwerte als Konfigurationsdaten an die jeweiligen Steuergeräte übertragen und in ROM, RAM oder EEPROM Datenspeichern gespeichert. Ein solches Konfigurationsverfahren kann dabei nach einer ersten Inbetriebnahme eines Steuergerätes zu dessen Neu- oder Erstkonfiguration oder mit jedem Start einer Maschinensteuerung als Systemstart-Konfigurationen durchgeführt werden.

Bei Maschinen mit eingebauter Maschinensteuerung ist es häufig so, dass bestimmte Parameter der Steuerung maschinenspezifisch sind und bei der Inbetriebnahme als Konfigurationsdaten in den hier als Steuergeräte bezeichneten Elektronikkomponenten der Maschinensteuerung eingestellt bzw. eingegeben werden müssen. Die Werte dieser Konfigurationsdaten sind zum Teil von Maschine zu Maschine sehr unterschiedlich, insbesondere dann wenn es sich um verschiedene Maschinentypen handelt. Aber selbst bei Maschinen gleicher Bauart, können sich die Konfigurationsdaten vergleichbarer Steuergeräte stark unterscheiden. Dies liegt zum Teil an Toleranzen der verwendeten Maschinenkomponenten wie etwa Antriebskomponenten, als auch an individuellen Parametern der Maschinen, etwa individuellen Einsatzdauern, Betriebsstunden, Laufleistungen, Optionsfreischaltungen oder persönlichen Einstellungen der Benutzer der Maschinen.

Bislang ist es insbesondere nach dem Austausch eines Steuergerätes meist zwingend notwendig, dem neu eingebauten Steuergerät der Maschine die individuellen Maschinenparameter als Konfigurationsdaten neu einzugeben, da ein neues Steuergerät oder eine Austauschsteuerung nur Standardwerte beinhalten kann. Diese Konfigurationsarbeit erfordert einen erheblichen Zeitaufwand und ist oftmals nur durch geschultes Personal durchzuführen. Dies gilt umso mehr, wenn es sich bei dem Steuergerät um ein zentrales Steuergerät wie die Zentralsteuerung der Maschine handelt, da die Maschine dann meist wie eine Neumaschine zu behandeln und komplett neu zu konfigurieren ist.
[0004a] Ein automatisiertes Konfigurationsverfahren für ein Steuergerät einer Maschine ist aus der US 6,175,770 B1 bekannt.

**Aufgabe** der Erfindung ist es ein Konfigurationsverfahren für ein Steuergerät einer Maschine anzugeben, das besonders einfach, schnell und zuverlässig durchzuführen ist.
Diese Aufgabe wird gelöst von einem Konfigurationsverfahren gemäß dem Anspruch 1. Weiterbildungen dieses Konfigurationsverfahrens sind Gegenstand der abhängigen Ansprüche.

Die Lösung dieser Aufgabe gelingt mit einem Konfigurationsverfahren für ein Steuergerät einer Maschine, das einen Datenspeicher aufweist und in eine Maschinensteuerung eingebaut wird, die wenigstens ein bereits konfiguriertes Steuergerät mit einem Datenspeicher aufweist, wobei das zu konfigurierende Steuergerät mit dem bereits konfigurierten Steuergerät der Maschinensteuerung über eine Datenverbindung kommuniziert und von diesem Konfigurationsdaten für seine eigene Konfiguration bezieht. Bevorzugte Weiterbildungen des Verfahrens werden in den Unteransprüchen angegeben.

Erfindungsgemäß werden also die auch als Lernwerte bezeichneten Konfigurationsdaten nicht nur in dem betreffenden Steuergerät selbst, sondern auch in anderen speicherfähigen Elektronikkomponenten der Maschinensteuerung hinterlegt. Wird nun ein Steuergerät ausgetauscht, kann sich das neu eingebaute und noch zu konfigurierende Steuergerät seine Konfigurationsdaten von den anderen in der Maschinensteuerung verbliebenen Steuergeräten selbst abholen. Somit kann ein manuelles Eingeben der Konfigurationsdaten entfallen. Das erfindungsgemäße Konfigurationsverfahren ist folglich insbesondere auch bei Neukonfigurationen besonders einfach und schnell durchzuführen. Die Datenverbindung kann eine Busverbindung z.B. ein CAN Bus sein.

Die Konfigurationsdaten werden im Datenspeicher des zu konfigurierenden Steuergerätes gespeichert. Dies hat den Vorteil, dass das Steuergerät nicht bei jedem Start der Maschinensteuerung seine Konfigurationsdaten aufs Neue vom wenigstens einen anderen Steuergerät einlesen muss. Ein nach der Datenspeicherung vorgenommener Systemstart erfolgt also noch schneller und komfortabler. Der Datenspeicher kann ein ROM, EEPROM, RAM oder ähnliches sein.

Das zu konfigurierende Steuergerät führt vor dem Bezug oder der Speicherung der Konfigurationsdaten eine Sicherungsabfrage durch. Hierbei kann eine Konfigurationsberechtigung abgefragt werden, die mit einer im Datenspeicher des zu konfigurierenden Steuergerätes hinterlegten Konfigurationsberechtigung verglichen wird. Diese Konfigurationsberechtigung kann etwa ein Passwort, ein Code oder ein Hardwaresignal sein. Nur bei Übereinstimmung der abgefragten mit der hinterlegten Konfigurationsberechtigung werden die von der Maschinensteuerung erhaltenen Konfigurationsdaten im Datenspeicher des Steuergerätes bezogen oder gespeichert. Die Konfigurationsberechtigung wird von einem Benutzer der Maschine mit Hilfe eines Eingabemittels eingegeben, das mit dem zu konfigurierenden Steuergerätes oder mit der Maschinensteuerung verbunden ist. Geeignete Eingabemittel sind hierbei Tastaturen, berührungssensitive Bildschirme oder ähnliches. Die Sicherheitsabfrage selbst kann in mehrere einzelne Abfragen aufgegliedert sein.

Zweckmäßigerweise wird bei der Sicherungsabfrage eine Plausibilitätskontrolle durchgeführt, bei der die von der Maschinensteuerung erhaltenen Konfigurationsdaten mit im zu konfigurierenden Steuergerät hinterlegten Plausibilitätsdaten verglichen werden. Es wird also anhand von vorgegebenen Werten oder Wertebereichen überprüft, ob die erhaltenen Konfigurationsdaten mit diesen Daten übereinstimmen bzw. ob sie innerhalb eines zulässigen Wertebereichs liegen und somit sinnvoll erscheinen. Die Plausibilitätsdaten können im Datenspeicher des zu konfigurierenden Steuergerätes in einer Wertetabelle hinterlegt sein. Alternativ können die Plausibilitätsdaten auch in der Systemsoftware des Steuergerätes selbst integriert sein.

In einer weiteren bevorzugten Ausführungsform des erfindungsgemäßen Konfigurationsverfahren kommuniziert das zu konfigurierende Steuergerät mit dem ersten und wenigstens einem zweiten bereits konfigurierten Steuergerät der Maschinensteuerung über Datenverbindungen und erhält von diesen wenigstens zwei Steuergeräten jeweils Konfigurationsdaten. Das heißt, dass die Maschinensteuerung dann insgesamt wenigstens drei Steuergeräte mit Speicher aufweist, die zum Beispiel mit einem oder mehreren Bussystemen verbunden sein können.

Bevorzugt betreffen die Konfigurationsdaten, die das zu konfigurierende Steuergerät von den wenigstens zwei bereits konfigurierten Steuergeräten der Maschinensteuerung erhält, gleiche Konfigurationsparameter. Beispielsweise beziehen sich die dann erhaltenen Konfigurationsdaten auf ein und denselben Maschinenparameter wie etwa die Laufleistung der Maschine.

In einer besonders vorteilhaften Weiterbildung des Verfahrens wird bei der Sicherungsabfrage eine Übereinstimmungsprüfung durchgeführt wird, bei der die von den bereits konfigurierten Steuergeräten erhaltenen Konfigurationsdaten untereinander verglichen werden. Damit kann eine vollautomatische Konfiguration des neu eingebauten Steuergerätes realisiert werden, bei dem stets vor der Übernahme der Konfigurationsdaten in das zu konfigurierende Steuergerät überprüft wird, ob und wieweit die Daten der beiden anderen Steuergeräte übereinstimmen. Daraus lassen sich dann auch Rückschlüsse auf die Funktionsweise der anderen Steuergräte bzw. der Maschinensteuerung schließen.

Bevorzugt werden nur dann Konfigurationsdaten im zu konfigurierenden Steuergerät gespeichert, wenn alle jeweils erhaltenen Konfigurationsdaten in den betreffenden Konfigurationsparametern übereinstimmen. Damit kann wirksam erhindert werden, dass Konfigurationsdaten auf das zu konfigurierende Steuergerät übertragen werden, wenn Abweichungen zwischen den erhaltenen Konfigurationsdaten festgestellt werden. Das heißt, dass sobald eine Abweichung zwischen den erhaltenen Konfigurationsdaten vorliegt, gar keine Konfigurationsdaten im zu konfigurierenden Steuergerät gespeichert werden. Dies dient dem Schutz vor einer Konfiguration mit fehlerhaften Konfigurationsdaten.

In einer alternativen Weiterbildung werden einzelne Konfigurationsdaten im zu konfigurierenden Steuergerät gespeichert, wenn sie mit allen anderen jeweils erhaltenen und denselben Konfigurationsparameter betreffenden Konfigurationsdaten übereinstimmen. Das bedeutet, das anders als bei der zuvor beschriebenen Verfahrensvariante einzelne Konfigurationsdaten dann gespeichert werden, wenn in einzelnen Konfigurationsparametern übereinstimmen. Es werden also mit anderen Worten nur die Daten nicht gespeichert, bei denen eine Abweichung festgestellt wird.

In einer weiteren Alternative werden einzelne Konfigurationsdaten im zu konfigurierenden Steuergerät gespeichert, wenn sie mit der Mehrheit der anderen jeweils erhaltenen entsprechenden Konfigurationsdaten übereinstimmen. Das heißt, dass in einer Mehrheitsentscheidung das weitere Vorgehen mit den erhaltenen Konfigurationsdaten festgelegt wird. Diesbezüglich sind auch andere Strategien wie etwa gewichtete Mehrheitsentscheidungen zum weiteren Vorgehen denkbar.

Zweckmäßigerweise sind verschiedenen Steuergeräten der Maschinensteuerung unterschiedliche Hierarchiestufen zugewiesen. Dabei wird den Konfigurationsdaten eines Steuergerätes einer höheren Hierarchiestufe Vorrang bei der Übereinstimmungsprüfung gegenüber den Konfigurationsdaten eines Steuergerätes einer niedrigeren Hierarchiestufe eingeräumt. Insbesondere sind Master-Slave Konfigurationen zweckmäßig, bei denen insbesondere ein Zentral-Steuergerät als Master dient. Dann erhalten die anderen untergeordneten Steuergeräte als Slaves ihre Konfiguration zwingend vom Master.

Es ist vorteilhaft, wenn einzelne Konfigurationsdaten zu Konfigurationsdatensätzen zusammengefasst werden. So können maschinentypische Konfigurationsdaten zu Gruppen zusammengefasst werden und als Gruppe bearbeitet werden. In besonders zweckmäßiger Weise werden für einzelne Konfigurationsdatensätze Kennzahlen vergeben. Damit kann die Anzahl der abzugleichenden Datenmenge reduziert werden. Die Konfiguration erfolgt schneller.

Bevorzugt werden bei der Übereinstimmungsprüfung statt sämtlicher Konfigurationsdaten zumindest teilweise nur die Kennzahlen einzelner Konfigurationsdatensätze überprüft. Soweit einzelne Kennzahlen nicht übereinstimmen, können dann die entsprechenden Datensätze einzeln abgeglichen werden und soweit nötig einzeln entweder manuell oder auch automatisch konfiguriert werden.

In einer anderen Weiterbildung des erfindungsgemäßen Konfigurationsverfahrens wird bei einer nicht ordnungsgemäß beantworteten Sicherungsabfrage eine manuelle Eingabe zumindest einzelner Konfigurationsdaten durch den Benutzer der Maschine angefordert.

Besonders vorteilhaft ist es, wenn das Konfigurationsverfahren automatisch nach einem Einbau eines neuen Steuergerätes durchgeführt wird. Damit wird nach jedem Einbau eines Steuergerätes in die bestehende Maschinensteuerung eine selbsttätige Konfiguration vorgenommen. Dies ist besonders komfortabel und auch kostengünstig, da nur bei Abweichungen in den Konfigurationsdaten eine manuelle Konfiguration etwa durch Servicepersonal notwendig wird. So kann der Einbau von Steuergeräten auch vom Bedienungspersonal der Maschine vorgenommen werden.

Zweckmäßig ist es, dass bei jedem Start der Maschinensteuerung eine Konfigurationsberechtigung, eine Übereinstimmungsprüfung und/oder Plausibilitätsprüfung der Konfigurationsdaten zumindest einiger Steuergeräte der Maschinensteuerung durchgeführt. So wird sichergestellt, dass alle Steuergeräte stets, also nicht nur nach dem Einbau eines neuen Steuergerätes, ordnungsgemäß konfiguriert sind. Dann erfolgt das Konfigurationsverfahren bevorzugt so, dass wenn nicht alle ermittelten Konfigurationsdaten gleich sind, die Konfigurationsdaten aller Steuergeräte, durch solche Konfigurationsdaten ersetzt werden, die mit denen der Mehrheit der ermittelten Konfigurationsdaten übereinstimmen und/oder die von einem Steuergerät einer höheren Hierarchiestufe stammen.

Bevorzugt enthalten die Konfigurationsdaten auf den Maschinentyp bezogene Daten und / individuelle Daten der einzelnen Maschine.

In einer besonders bevorzugten Weiterbildung des Konfigurationsverfahrens werden zumindest zwei Steuergeräte unterschiedlicher Art zur Maschinensteuerung verwendet, so dass in zumindest einem der Steuergeräte Daten für ein Steuergerät einer anderen als seiner eigenen Art hinterlegt sind. In einem solchen Fall erhält das zu konfigurierende Steuergerät zum Beispiel Daten von einem Steuergerät einer anderen Bauart, das ganz andere Steuerfunktionen in der Maschinensteuerung erfüllt. Im bereits konfigurierten Steuergerät sind dementsprechend Daten gespeichert, die nicht für dessen eigene Funktion benötigt werden.

Bevorzugt arbeitet ein Steuergerät als Zentralsteuergerät, dem die Aufgabe einer alle Steuergeräte koordinierenden Zentralsteuerung zugewiesen wird. Dann ist es zweckmäßig, wenn dieses Zentralsteuergerät die höchste Hierarchiestufe für die Übereinstimmungsprüfung hat. Es ist dann mit anderen Worten das Master-Steuergerät in einer Master-Slave Konfiguration der Maschinensteuerung.

Bevorzugt kommt das erfindungsgemäße Verfahren bei der Konfiguration von Steuergeräten in Baumaschinen wie etwa Verdichtungsgeräten, Straßenbauwalzen, Vibrationsplatten oder ähnlichen Maschinen zur Anwendung, z.B. bei Fräsen und Müllverdichtern.

Nachfolgend wird das erfindungsgemäße Konfigurationsverfahren anhand von zwei in der Zeichnung dargestellten Ausführungsbeispielen näher erläutert. Darin zeigen schematisch:
- Fig. 1: eine schematische Darstellung einer Maschinensteuerung mit zwei Steuergeräten;
- Fig. 2: ein Ablaufdiagramm eines ersten Ausführungsbeispiels des Konfigurationsverfahren mit zwei Steuergeräten;
- Fig. 3: eine schematische Darstellung einer Maschinensteuerung mit drei Steuergeräten;
- Fig. 4: ein Ablaufdiagramm eines zweiten Ausführungsbeispiels des Konfigurationsverfahren mit drei Steuergeräten.

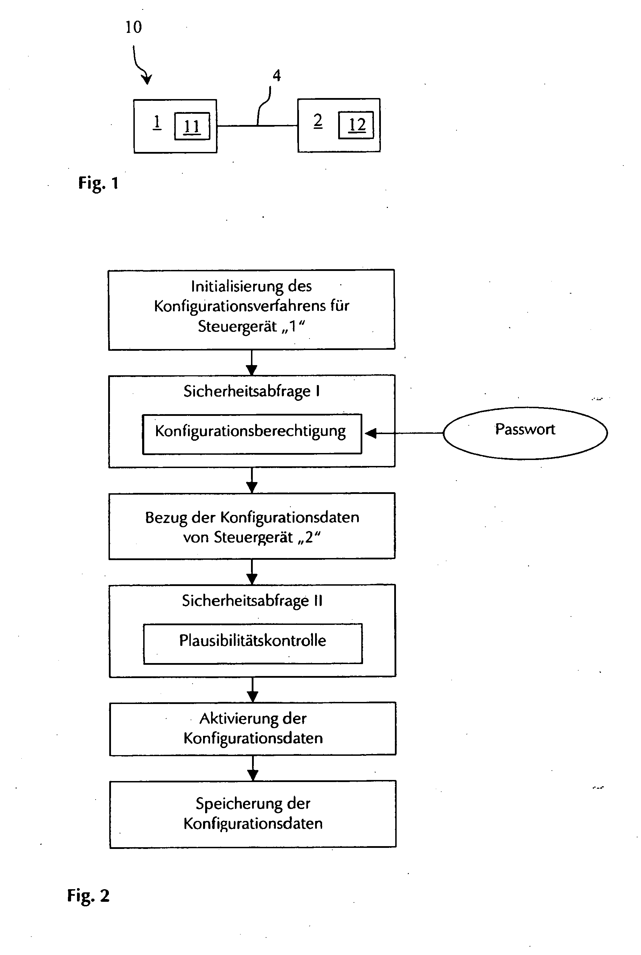

In Fig. 1 ist eine Maschinensteuerung 10 für eine Bodenverdichtungswalze mit zwei Steuergeräten 1 und 2 gezeigt, die über einen CAN-Bus 4 miteinander verbunden sind. Beide Steuergeräte 1 und 2 weisen jeweils einen EEPROM-Datenspeicher 11 und 12 auf. Das Steuergerät 1 wird in die Maschinensteuerung 10 eingebaut und bezieht nach dem Einbau in die Maschinensteuerung 10 seine Konfigurationsdaten vom Steuergerät 2, das bereits konfiguriert ist. Bei diesem Ausführungsbeispiel ist das Steuergerät 1 ein Zentralsteuergerät höherer Hierarchieebene. Das heißt, dass das Steuergerät 1 der Master und das Steuergerät 2 der Slave ist.

Muss bei der in Fig. 1 gezeigten Maschinensteuerung 10 eines der beiden Steuergeräte 1 oder 2 zum Beispiel aufgrund eines Defektes ausgetauscht werden, so kann die Konfiguration des neueingebauten Steuergerätes erfindungsgemäß halbautomatisch erfolgen. In Fig. 2 wird gezeigt, wie im Falle des Neueinbaus eines ausgetauschten Zentralsteuergerätes 1 das erfindungsgemäße Konfigurationsverfahren abläuft.

Das neueingebaute Steuergerät 1 ist zunächst noch ohne Konfigurationsdaten und startet mit seiner ersten Inbetriebnahme ein Initialisierungsprogramm für die Konfiguration. Darin erfragt das Steuergerät 1 zunächst in einem ersten Teil der Sicherheitsabfrage eine, auch als Freigabebedingung bezeichnete, Konfigurationsberechtigung des Benutzers. Dieser gibt manuell seine Konfigurationsberechtigung über eine Tastatur an das Steuergerät 1. Nach ordnungsgemäßer Passworteingabe kommuniziert das Steuergerät 1 mit dem Steuergerät 2 über den Datenbus und empfängt vom Steuergerät 2 seine Konfigurationsdaten. Alternativ kann sich das Steuergerät 1 die Daten auch selbst aus dem Speicher 12 des Steuergeräts 2 laden. Nach dem Empfang der Konfigurationsdaten überprüft das Steuergerät 1 in einem zweiten Teil der Sicherheitsabfrage in einer Plausibilitätskontrolle, ob die vom Steuergerät 2 bezogenen Konfigurationsdaten in einem üblichen Wertebereich liegen. Dies geschieht durch einen Vergleich der empfangenen Daten mit einer in einem ROM-Speicher hinterlegten Wertetabelle. Sind die Daten plausibel, werden sie automatisch im Speicher 11 des Steuergeräts gespeichert und die Konfiguration ist erfolgreich abgeschlossen. Liegen die vom Slave 2 empfangenen Daten nicht im plausiblen Bereich, werden nur die Konfigurationsdaten gespeichert, die plausibel sind. Die restlichen Konfigurationsdaten müssen vom Bedienungspersonal manuell in das Steuergerät 1 eingegeben, bzw. werden aus der ROM-Tabelle übernommen, und gespeichert werden.

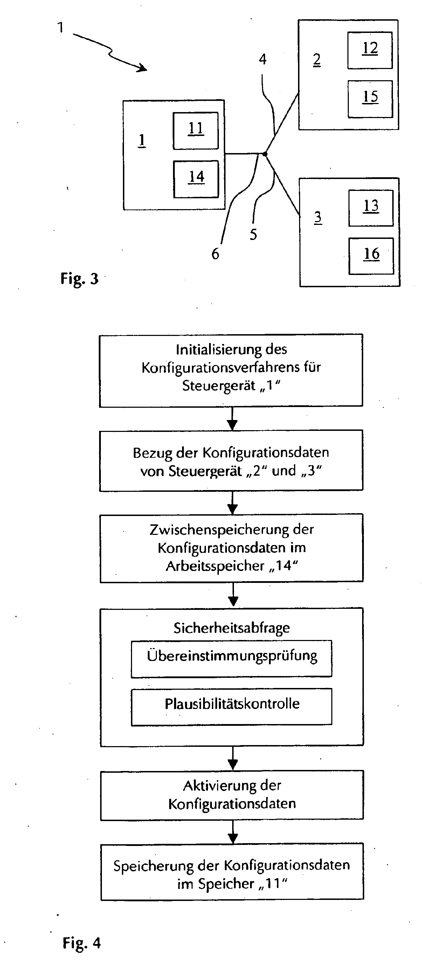

In Fig. 3 ist eine Maschinensteuerung 10 für eine Bodenverdichtungswalze gezeigt, die drei Steuergeräte 1, 2, 3 aufweist. Die Steuergeräte 1, 2, 3 sind über drei CAN-Bus Verbindungen 4, 5, 6 miteinander verbunden und weisen bei diesem Ausführungsbeispiel alle jeweils einen EEPROM-Datenspeicher 11, 12, 13 auf. Zusätzlich haben die Steuergeräte 1, 2, 3 alle auch einen Arbeitsspeicher 14, 15, 16. Das Steuergerät 1 ist wie beim in Fig. 1 gezeigten ersten Ausführungsbeispiel der Master, während die Steuergeräte 2 und 3 Slaves sind.

Wird nun das Steuergerät 1 in die bestehende Maschinensteuerung 10 eingebaut und erstmalig in Betrieb genommen, erfolgt seine Konfiguration vollautomatisch mit Hilfe der Steuergeräte 2 und 3, wie im Ablaufplan der Fig. 4 gezeigt ist. Dabei startet die Zentralsteuerung 1 mit einem Initialisierungsprogramm und fragt selbsttätig seine Konfigurationsdaten über eine Bus-Datenverbindung 4 oder 5 von den beiden Steuergeräten 2 und 3 ab, die im RAM-Arbeitsspeicher 14 zwischengespeichert werden. Danach werden die empfangenen Konfigurationsdaten im Rahmen einer Sicherheitsabfrage einer Übereinstimmungsprüfung und einer Plausibilitätskontrolle unterzogen. Bei der Übereinstimmungsprüfung wird ermittelt, ob die von den Steuergeräten 2 und 3 erhaltenen Datensätze gleich sind und bei der Plausibilitätskontrolle wird überprüft, ob die von den Steuergeräten 2, 3 bezogenen Konfigurationsdaten in einem üblichen Wertebereich liegen. Sind die Konfigurationsdaten gleich und plausibel, werden sie in der Zentralsteuerung 1 aktiviert und in dessen EEPROM-Speicher 11 gespeichert. Danach stehen die Konfigurationsdaten dem Steuergerät 1 bei jedem Systemstart zur Verfügung.

Im Normalbetrieb, also wenn keines der Steuergeräte neukonfiguriert werden muss, erfolgt eine Systemstart-Konfiguration des Steuergerätes 1. Diese wird bei jedem Start der Maschinensteuerung automatisch durchgeführt, wobei das Zentralsteuergerät 1 seine eigenen Konfigurationsdaten aus dem EEPROM 11 und die in den Speichern 11 und 12 der Steuergeräte 2 und 3 hinterlegten Konfigurationsdaten ausliest und in den Arbeitsspeicher 14 lädt. Dort vergleicht es im Rahmen der Übereinstimmungsprüfung die Konfigurationsdaten untereinander. Sind die Werte aller drei Komponenten gleich, wird der Startvorgang des Zentralsteuergerätes 1 fortgesetzt. Stimmt jedoch ein Wert eines Steuergerätes nicht mit denen der anderen überein, so werden dessen Konfigurationsdaten durch die Daten der anderen Steuergeräte ersetzt.

Unabhängig davon, ob es sich um eine Neukonfiguration oder eine Systemstart-Konfiguration handelt, wird die automatische Konfiguration der Steuergeräte 1, 2, oder 3 dann abgebrochen, wenn keine Entscheidung getroffen werden kann, welche Konfigurationsdaten gültig sind. Das ist zum Beispiel dann der Fall, wenn das Zentralsteuergerät 1 bei seiner Neukonfiguration von den beiden Slaves 2 und 3 widersprüchliche Konfigurationsdaten erhält. Dann werden die bereits bestehenden Werte verworfen und eine manuelle Konfiguration erzwungen.

## Patentansprüche

1. Konfigurationsverfahren für ein Master-Steuergerät (1) einer Baumaschine oder eines Müllverdichters, das einen Datenspeicher (11) aufweist und in eine Maschinensteuerung (10) eingebaut wird, die wenigstens ein bereits konfiguriertes Slave-Steuergerät (2) mit einem Datenspeicher (12) aufweist, wobei das zu konfigurierende Master-Steuergerät (1) mit dem bereits konfigurierten Slave-Steuergerät (2) der Maschinensteuerung (10) über eine Datenverbindung (4) kommuniziert,
**dadurch gekennzeichnet,**
**dass** das Master-Steuergerät (1) vom Slave-Steuergerät (2) Konfigurationsdaten für seine eigene Konfiguration bezieht, wobei die Konfigurationsdaten individuelle maschinenspezifische Daten oder Parameter, wie Pumpen-, Ventil-, Mechanikdaten, oder Lernwerte, wie Betriebsstände, beispielsweise die Laufleistung der Baumaschine, deren Einsatzdauer, persönliche Einstellungen oder Optionsfreischaltungen, umfassen, und wobei
das zu konfigurierende Master-Steuergerät (1) vor der Speicherung der Konfigurationsdaten eine Sicherungsabfrage durchführt, bei der eine Plausibilitätskontrolle durchgeführt wird, bei der die erhaltenen Konfigurationsdaten mit im zu konfigurierenden Master-Steuergerät (1) hinterlegten Plausibilitätsdaten verglichen werden, um zu überprüfen, ob die erhaltenen Konfigurationsdaten mit diesen hinterlegten Daten übereinstimmen oder innerhalb eines zulässigen Wertebereiches liegen.

2. Konfigurationsverfahren nach Anspruch 1,
**dadurch gekennzeichnet,**
**dass** die Konfigurationsdaten im Datenspeicher (11) des zu konfigurierenden Master-Steuergerätes (1) gespeichert werden.

3. Konfigurationsverfahren nach Anspruch 2,
**dadurch gekennzeichnet,**
**dass** bei der Sicherungsabfrage eine Konfigurationsberechtigung abgefragt wird, die mit einer im Datenspeicher (11) des zu konfigurierenden Master-Steuergerätes (1) hinterlegten Konfigurationsberechtigung verglichen wird, so dass nur bei Übereinstimmung der abgefragten mit der hinterlegten Konfigurationsberechtigung, die von der Maschinensteuerung (10) erhaltenen Konfigurationsdaten im Datenspeicher (11) des Master-Steuergerätes (1) gespeichert werden.

4. Konfigurationsverfahren nach Anspruch 3,
**dadurch gekennzeichnet,**
**dass** die Konfigurationsberechtigung von einem Benutzer der Maschine mit Hilfe eines Eingabemittels eingegeben wird, das mit dem zu konfigurierenden Master-Steuergerät (1) oder mit der Maschinensteuerung (10) verbunden ist.

5. Konfigurationsverfahren nach einem der vorhergehenden Ansprüche,
**dadurch gekennzeichnet,**
**dass** das zu konfigurierende Master-Steuergerät (1) mit dem bereits konfigurierten Slave-Steuergerät (2) und wenigstens einem weiteren bereits konfigurierten Slave-Steuergerät (3) der Maschinensteuerung (10) über Datenverbindungen (4, 5, 6) kommuniziert und von diesen jeweils Konfigurationsdaten erhält.

6. Konfigurationsverfahren nach Anspruch 5,
**dadurch gekennzeichnet,**
**dass** die Konfigurationsdaten, die das zu konfigurierende Master-Steuergerät (1) von den wenigstens zwei bereits konfigurierten Slave-Steuergeräten (2, 3) der Maschinensteuerung (10) erhält, gleiche Konfigurationsparameter betreffen.

7. Konfigurationsverfahren nach einem der Ansprüche 5 oder 6,
**dadurch gekennzeichnet,**
**dass** bei der Sicherungsabfrage eine Übereinstimmungsprüfung durchgeführt wird, bei der die von den bereits konfigurierten Slave-Steuergeräten (2, 3) erhaltenen Konfigurationsdaten untereinander verglichen werden.

8. Konfigurationsverfahren nach Anspruch 7,
**dadurch gekennzeichnet,**
**dass** nur dann Konfigurationsdaten im zu konfigurierenden Master-Steuergerät (1) gespeichert werden, wenn alle jeweils erhaltenen Konfigurationsdaten in den betreffenden Konfigurationsparametern übereinstimmen.

9. Konfigurationsverfahren nach Anspruch 7,
**dadurch gekennzeichnet,**
**dass** einzelne Konfigurationsdaten im zu konfigurierenden Master-Steuergerät (1) gespeichert werden, wenn sie mit allen anderen jeweils erhaltenen und denselben Konfigurationsparameter betreffenden Konfigurationsdaten übereinstimmen.

10. Konfigurationsverfahren nach Anspruch 7,
**dadurch gekennzeichnet,**
**dass** einzelne Konfigurationsdaten im zu konfigurierenden Master-Steuergerät (1) gespeichert werden, wenn sie mit der Mehrheit der anderen jeweils erhaltenen entsprechenden Konfigurationsdaten übereinstimmen.

11. Konfigurationsverfahren nach einem der vorhergehenden Ansprüche,
**dadurch gekennzeichnet,**
**dass** verschiedenen Steuergeräten (1, 2, 3) der Maschinensteuerung unterschiedliche Hierarchiestufen zugewiesen sind, wobei den Konfigurationsdaten eines Steuergerätes (1) einer höheren Hierarchiestufe Vorrang bei der Übereinstimmungsprüfung gegenüber den Konfigurationsdaten eines Steuergerätes (2 oder 3) einer niedrigeren Hierarchiestufe eingeräumt wird.

12. Konfigurationsverfahren nach einem der vorhergehenden Ansprüche,
**dadurch gekennzeichnet,**
**dass** einzelne Konfigurationsdaten zu Konfigurationsdatensätzen zusammengefasst werden.

13. Konfigurationsverfahren nach Anspruch 12,
**dadurch gekennzeichnet,**
**dass** für einzelne Konfigurationsdatensätze Kennzahlen vergeben werden.

14. Konfigurationsverfahren nach Anspruch 13,
**dadurch gekennzeichnet,**
**dass** bei der Übereinstimmungsprüfung statt sämtlicher Konfigurationsdaten zumindest teilweise nur die Kennzahlen einzelner Konfigurationsdatensätze überprüft werden.

15. Konfigurationsverfahren nach einem der vorhergehenden Ansprüche,
**dadurch gekennzeichnet,**
**dass** bei einer nicht ordnungsgemäß beantworteten Sicherungsabfrage eine manuelle Eingabe zumindest einzelner Konfigurationsdaten durch den Benutzer der Maschine angefordert wird.

16. Konfigurationsverfahren nach einem der vorhergehenden Ansprüche,
**dadurch gekennzeichnet,**
**dass** es automatisch nach einem Einbau eines neuen Steuergerätes (1, 2, 3) durchgeführt wird.

17. Konfigurationsverfahren nach einem der vorhergehenden Ansprüche,
**dadurch gekennzeichnet,**
**dass** bei jedem Start der Maschinensteuerung (10) eine Konfigurationsberechtigung, eine Übereinstimmungsprüfung und/oder Plausibilitätsprüfung der Konfigurationsdaten zumindest einiger Steuergeräte (1, 2, 3) der Maschinensteuerung (10) durchgeführt wird.

18. Konfigurationsverfahren nach Anspruch 17,
**dadurch gekennzeichnet,**
**dass**, wenn nicht alle ermittelten Konfigurationsdaten gleich sind, die Konfigurationsdaten aller Steuergeräte (1, 2, 3), durch solche Konfigurationsdaten ersetzt werden, die mit denen der Mehrheit der ermittelten Konfigurationsdaten übereinstimmen und/oder die von einem Steuergerät (1) einer höheren Hierarchiestufe stammen.

19. Konfigurationsverfahren nach einem der vorhergehenden Ansprüche,
**dadurch gekennzeichnet,**
**dass** zumindest zwei Steuergeräte (1, 2) unterschiedlicher Art zur Maschinensteuerung verwendet werden, so dass in zumindest einem der Steuergeräte (2) Daten für ein Steuergerät (1) einer anderen als seiner eigenen Art hinterlegt sind.

## Claims

1. A configuration method for a master control unit (1) of a construction machine or a garbage compactor, which has a data memory (11) and is installed in a machine controller (10), which has at least one already-configured slave control unit (2) having a data memory (12), the master control unit (1) to be configured communicating with the already-configured slave control unit (2) of the machine controller (10) via a data connection (4),
**characterized in that**
the master control unit (1) acquires configuration data for its own configuration from the slave control unit (2), the configuration data comprising individual machine-specific data or parameters, such as pump, valve, or mechanical data, or learned values, such as operating states, for example, the mileage of the construction machine, its period of use, personal settings, or option activations, and
the master control unit (1) to be configured performs a security inquiry before the storage of the configuration data, in which a plausibility check is performed, in which the received configuration data is compared to plausibility data stored in the master control unit (1) to be configured, in order to check whether the received configuration data correspond to these stored data or are within a permissible value range.

2. The configuration method according to Claim 1,
**characterized in that**
the configuration data are stored in the data memory (11) of the master control unit (1) to be configured.

3. The configuration method according to Claim 2,
**characterized in that**
during the security inquiry, a configuration authorization is requested, which is compared to a configuration authorization stored in the data memory (11) of the master control unit (1) to be configured, so that the configuration data received by the machine controller (10) is only stored in the data memory (11) of the master control unit (1) if the requested configuration authorization corresponds to the stored configuration authorization.

4. The configuration method according to Claim 3,
**characterized in that**
the configuration authorization is input by a user of the machine with the aid of input means, which are connected to the master control unit (1) to be configured or to the machine controller (10).

5. The configuration method according to one of the preceding claims,
**characterized in that**
the master control unit (1) to be configured communicates with the already-configured slave control unit (2) and at least one further already-configured slave control unit (3) of the machine controller (10) via data connections (4, 5, 6) and receives configuration data from each thereof.

6. The configuration method according to Claim 5,
**characterized in that**
the configuration data which the master control unit (1) to be configured receives from the at least two already-configured slave control units (2, 3) of the machine controller (10) relate to identical configuration parameters.

7. The configuration method according to one of Claims 5 or 6,
**characterized in that**
during the security inquiry, a correspondence check is performed, in which the configuration data received from the already-configured slave control units (2, 3) are compared to one another.

8. The configuration method according to Claim 7,
**characterized in that**
configuration data are only stored in the master control unit (1) to be configured if all respectively received configuration data correspond in the relevant configuration parameters.

9. The configuration method according to Claim 7,
**characterized in that**
individual configuration data are stored in the master control unit (1) to be configured if they correspond to all other respectively obtained configuration data relating to the same configuration parameters.

10. The configuration method according to Claim 7,
**characterized in that**
individual configuration data are stored in the master control unit (1) to be configured if they correspond to the majority of the other respectively received corresponding configuration data.

11. The configuration method according to one of the preceding claims,
**characterized in that**
various control units (1, 2, 3) of the machine controller are assigned to different hierarchy levels, the configuration data of a control unit (1) of a higher hierarchy level being granted priority in the correspondence check over the configuration data of a control unit (2 or 3) of a lower hierarchy level.

12. The configuration method according to one of the preceding claims,
**characterized in that**
individual configuration data are assembled into configuration data sets.

13. The configuration method according to Claim 12,
**characterized in that**
characteristic numbers are assigned for individual configuration data sets.

14. The configuration method according to Claim 13,
**characterized in that**
in the correspondence check, instead of all configuration data, at least partially only the characteristic numbers of individual configuration data sets are checked.

15. The configuration method according to one of the preceding claims,
**characterized in that**
in the event of an incorrectly answered security inquiry, a manual input of at least individual configuration data by the user of the machine is requested.

16. The configuration method according to one of the preceding claims,
**characterized in that**
it is performed automatically after an installation of a new control unit (1, 2, 3).

17. The configuration method according to one of the preceding claims,
**characterized in that**
during each start of the machine controller (10), a configuration authorization, a correspondence check, and/or a plausibility check of the configuration data of at least some control units (1, 2, 3) of the machine controller (10) is performed.

18. The configuration method according to Claim 17,
**characterized in that**
if all ascertained configuration data are not identical, the configuration data of all control units (1, 2, 3) are replaced by those configuration data which correspond to the majority of the ascertained configuration data and/or which originate from a control unit (1) of a higher hierarchy level.

19. The configuration method according to one of the preceding claims,
**characterized in that**
at least two control units (1, 2) of different types are used for the machine controller, so that data for a control unit (1) of a type other than its own are stored in at least one of the control units (2).

## Revendications

1. Procédé de configuration pour une unité de commande maître (1) d'un engin de chantier ou d'un compacteur à ordures ménagères qui comporte une mémoire de données (11) et qui est intégrée dans une commande de machine (10) comprenant au moins une unité de commande esclave (2) déjà configurée avec une mémoire de données (12), dans lequel l'unité de commande maître (1) à configurer communique avec l'unité de commande esclave (2) déjà configurée de la commande de machine (10) par une liaison de données (4),
**caractérisé en ce**
**que** l'unité de commande maître (1) reçoit de l'unité de commande esclave (2) des données de configuration pour sa propre configuration, lesquelles données de configuration comprennent des données ou paramètres individuels spécifiques de la machine tels que des données de pompes, de vannes, de mécanismes, ou des valeurs d'apprentissage tels que des états de fonctionnement, par exemple le kilométrage de l'engin de chantier, sa durée de service, des réglages personnels ou des déblocages d'options,
et dans lequel l'unité de commande maître (1) à configurer exécute avant l'enregistrement des données de configuration une interrogation de sécurité lors de laquelle un contrôle de plausibilité est effectué, au cours duquel les données de configuration reçues sont comparées à des données de plausibilité enregistrées dans l'unité de commande maître (1) à configurer, afin de vérifier si les données de configuration reçues concordent avec les données enregistrées ou se situent dans une plage de valeurs admissible.

2. Procédé de configuration selon la revendication 1,
**caractérisé en ce**
**que** les données de configuration sont enregistrées dans la mémoire de données (11) de l'unité de commande maître (1) à configurer.

3. Procédé de configuration selon la revendication 2,
**caractérisé en ce**
**que** lors de l'interrogation de sécurité, l'unité demande une autorisation de configuration qui est comparée à l'autorisation de configuration enregistrée dans la mémoire de données (11) de l'unité de commande maître (1) à configurer, de sorte que les données de configuration reçues de la commande de machine (10) ne sont enregistrées dans la mémoire de données (11) de l'unité de commande maître (1) que si les autorisations de configuration consultée et enregistrée concordent.

4. Procédé de configuration selon la revendication 3,
**caractérisé en ce**
**que** l'autorisation de configuration est saisie par un utilisateur de la machine à l'aide d'un moyen de saisie qui est connecté à l'unité de commande maître (1) à configurer ou à la commande de machine (10).

5. Procédé de configuration selon l'une des revendications précédentes,
**caractérisé en ce**
**que** l'unité de commande maître (1) à configurer communique avec l'unité de commande esclave (2) déjà configurée et avec au moins une autre unité de commande esclave (3) déjà configurée de la commande de machine (10) par des liaisons de données (4, 5, 6) et reçoit de chacune des données de configuration.

6. Procédé de configuration selon la revendication 5,
**caractérisé en ce**
**que** les données de configuration que l'unité de commande maître (1) à configurer reçoit des au moins deux unités de commande esclaves (2, 3) déjà configurées de la commande de machine (10) concernent les mêmes paramètres de configuration.

7. Procédé de configuration selon l'une des revendications 5 ou 6,
**caractérisé en ce**
**que** lors de l'interrogation de sécurité, l'unité procède à un contrôle de concordance lors duquel les données de configuration reçues des unités de commande esclaves (2, 3) déjà configurées sont comparées entre elles.

8. Procédé de configuration selon la revendication 7,
**caractérisé en ce**
**que** les données de configuration ne sont enregistrées dans l'unité de commande maître (1) à configurer que si toutes les données de configuration reçues concordent dans les paramètres de configuration concernés.

9. Procédé de configuration selon la revendication 7,
**caractérisé en ce**
**que** les différentes données de configuration sont enregistrées dans l'unité de commande maître (1) à configurer si elles concordent avec toutes les autres données de configuration reçues et concernant le même paramètre de configuration.

10. Procédé de configuration selon la revendication 7,
**caractérisé en ce**
**que** les différentes données de configuration sont enregistrées dans l'unité de commande maître (1) à configurer si elles concordent avec la majorité des autres données de configuration correspondantes reçues.

11. Procédé de configuration selon l'une des revendications précédentes,
**caractérisé en ce**
**que** différentes unités de commande (1, 2, 3) de la commande de machine sont affectées à différents niveaux hiérarchiques, les données de configuration d'une unité de commande (1) d'un niveau hiérarchique supérieur étant prioritaires lors du contrôle de concordance sur les données de configuration d'une unité de commande (2 ou 3) d'un niveau hiérarchique inférieur.

12. Procédé de configuration selon l'une des revendications précédentes,
**caractérisé en ce**
**que** les différentes données de configuration sont réunies en ensembles de données de configuration

13. Procédé de configuration selon la revendication 12,
**caractérisé en ce**
**que** des nombres caractéristiques sont attribués aux différents ensembles de données de configuration.

14. Procédé de configuration selon la revendication 13,
**caractérisé en ce**
**que** lors du contrôle de concordance, au moins pour une partie, seuls les nombres caractéristiques de certains ensembles de données de configuration sont vérifiés, au lieu de données de configuration.

15. Procédé de configuration selon l'une des revendications précédentes,
**caractérisé en ce**
**que** lorsque la réponse à une interrogation de sécurité n'est pas correcte, une saisie manuelle d'au moins certaines données de configuration par l'utilisateur de la machine est demandée.

16. Procédé de configuration selon l'une des revendications précédentes,
**caractérisé en ce**
**qu'**il est exécuté automatiquement après l'installation d'une nouvelle unité de commande (1, 2, 3).

17. Procédé de configuration selon l'une des revendications précédentes,
**caractérisé en ce**
**qu'**à chaque démarrage de la commande de machine (10), une autorisation de configuration, un contrôle de concordance et/ou un contrôle de plausibilité des données de configuration d'au moins quelques unités de commande (1, 2, 3) de la commande de machine (10) sont exécutés.

18. Procédé de configuration selon la revendication 17,
**caractérisé en ce**
**que** si toutes les données de configuration ne sont pas identiques, les données de configuration de toutes les unités de commande (1, 2, 3) sont remplacées par des données de configuration concordant avec celles de la majorité des données de configuration déterminées et/ou provenant d'une unité de commande (1) d'un niveau hiérarchique supérieur.

19. Procédé de configuration selon l'une des revendications précédentes,
**caractérisé en ce**
**qu'**au moins deux unités de commande (1, 2) de type différent sont utilisées avec la commande de machine, de sorte qu'au moins une des unités de commande (2) possède en mémoire des données pour une unité de commande (1) d'un type différent du sien.
